# EUROPÄISCHE PATENTSCHRIFT

(11) **EP 2 695 705 B1**
(45) Veröffentlichungstag und Bekanntmachung des Hinweises auf die Patenterteilung: **12.04.2017**
(21) Anmeldenummer: 13179968.6
(22) Anmeldetag: 09.08.2013
(51) Int. Cl.: B23Q 1/00, B23Q 1/62, B66C 13/12, F16G 13/16, H02G 11/00

(54) **Werkzeugmaschine mit Energieführungskette**
Machine tool with energy supply line
Machine-outil avec ligne de transmission d'énergie

(30) Priorität: 09.08.2012 AT 503132012
(43) Veröffentlichungstag der Anmeldung: 12.02.2014
(73) Patentinhaber: WFL Millturn Technologies GmbH & Co. KG, 4030 Linz (AT)
(72) Erfinder: Maringer, Herbert, Ing., 4642 Sattledt (AT)
(74) Vertreter: Jell, Friedrich

(56) Entgegenhaltungen:
- EP-A1- 1 520 661
- JP-A- H03 190 523
- JP-U- H0 247 135
- US-A- 3 410 415

## Beschreibung

Die Erfindung betrifft eine Werkzeugmaschine nach dem Oberbegriff des Anspruchs 1 (siehe JP-H0247135U). Aus dem Stand der Technik ist bei Werkzeugmaschinen bekannt, zwischen Längs- und Planschlitten eine Energieführungskette vorzusehen, um elektrische oder hydraulische Verbraucher des Planschlittens an den Längsschlitten anzuschließen bzw. über dessen Anschlüsse mit Energie zu versorgen oder auch zu steuern. Bekannte Energieführungsketten sind zum Planschlitten meist normal und seitlich angeordnet. Der Planschlitten wird über zwei Führungsschienen einer am Längsschlitten befestigten Linearführung geführt. Nachteilig sind durch die Energieführungskette erhöhte Freistellungen im Bereich des Planschlittens erforderlich, was zu Einschränkungen im Arbeitsraum der Werkzeugmaschine führen kann. Hinzu kommt, dass eine im Arbeitsraum einer Werkzeugmaschine bewegte Energieführungskette meist selbst Maßnahmen zum Schutz vor Beschädigungen verlangt, was zu konstruktiv aufwendigen Schutzgehäusen führen kann.

Die Erfindung hat sich daher die Aufgabe gestellt, eine Werkzeugmaschine mit einer zweiachsigen Schlittenkonstruktion der eingangs geschilderten Art derart auf konstruktiv einfache Weise zu verändern, dass damit Beschränkungen im Arbeitsraum der Werkzeugmaschine vermieden und dennoch elektrische, hydraulische und/oder pneumatische Anschlüsse am Planschlitten zur Verfügung gestellt werden können.

Die Erfindung löst die gestellte Aufgabe durch eine Werkzeugmaschine nach Anspruch 1. Ist die Energieführungskette sowohl im Wesentlichen zwischen den insbesondere äußeren Führungsschienen der Linearführung vorgesehen, kann die Energieführungskette aus dem Arbeitsraum der Werkzeugmaschine entfernt und in einen Bereich der Werkzeugmaschine verlagert werden, der eine ungenützte räumliche Freistellung zwischen seinen beiden Führungsschienen aufweist. Dies kann insbesondere bei geschlossenen Linearführungen der Fall sein. Wird zusätzlich die Energieführungskette zwischen Längs- und Planschlitten vorgesehen, kann damit der über der Energieführungskette bewegte Planschlitten genutzt werden, die Energieführungskette mechanisch zu schützen. Im Zuge einer Bearbeitung von Werkstücken anfallende Späne, Kühlschmiermittel etc. sind so von der Energieführungskette auf einfache Weise fern zu halten, wodurch eine besonders sichere Positionierung der Energieführungskette zwischen dem Längs- und Planschlitten ermöglicht werden kann. Die erfindungsgemäße Positionierung der Energieführungskette kann damit nicht nur Beschränkungen des Arbeitsraums aufgrund der Energieführungskette vermeiden und so zu kompakten Bauverhältnissen am Längs- und Planschlitten führen, sondern auch zuverlässig die Funktionstüchtigkeit der am Planschlitten vorgesehenen aktiven Mittel sicherstellen. Eine besonders kompakte und standfeste Werkzeugmaschine kann damit geschaffen werden.

Der Vorteil einer im Wesentlichen zwischen den beiden Führungsschienen vorgesehenen Energieführungskette kann insbesondere zum Tragen kommen, wenn der Planschlitten ein Führungsteil, das an die Linearführung anschließt, und eine Auskragung aufweist. Der Planschlitten kann nämlich in seinem Führungsteil hinsichtlich seiner Steifigkeit optimiert werden, und zwar insbesondere, wenn der Planschlitten mehrteilig ausgeführt ist. So kann vor allem auch der im Wesentlichen durch die Energieführungskette geprägte erhöhte Abstand zwischen den Führungsschienen genützt werden, das Führungsteil des Planschlittens konstruktiv auf ein erhöhtes Widerstandsmoment hin zu optimieren. Dies kann auch die Möglichkeit eröffnen, trotz einer hohen Gesamtsteifigkeit des Planschlittens eine Auskragung vorzusehen, wodurch beispielsweise die Montagefläche am Planschlitten erhöht werden kann. Die Auskragung kann außerdem zur Erhöhung der Standfestigkeit der Energieführungskette genützt werden, indem diese Auskragung mit dem Längsschlitten zur Ausbildung einer Schutzabdeckung für die Energieführungskette zusammenwirkt. Im Allgemeinen wird erwähnt, dass unter einer Energieführungskette nicht nur eine Kabelschleppe mit Kettengliedern zu verstehen ist. Jegliche Konstruktion zum Schutz einer Leitung zwischen Längs- und Planschlitten ist einer Energieführungskette zu subsumieren. Zudem können die beiden Führungsschienen Teile einer geschlossenen Führung (z.B.: am Planschlitten befestigte M-Führungsschiene) oder je einen Teil einer geschlossen Führung (z.B.: Führungsschiene einer Schwalbenschwanzführung) sein. Außerdem können die Führungsschienen beispielsweise eine runde oder prismatische etc. Form aufweisen.

Um die kompakten Bauverhältnisse der Schlittenanordnung von Längs- und Planschlitten nahezu unabhängig von den Abmessungen der Energieführungskette sicherzustellen, kann der Längsschlitten eine Ausnehmung zur Aufnahme der Energieführungskette ausbilden. Außerdem kann damit eine Schwächung der Steifigkeit des Planschlittens vermieden werden. Eine Ausnehmung am Längsschlitten kann im Gegensatz zu einer Ausnehmung am Planschlitten meist unproblematisch vorgesehen werden, zumal beim Längsschlitten meist keine erheblichen konstruktiven Einschränkungen durch Manipulationsvorgaben im Arbeitsraum der Werkzeugmaschine bestehen. Trotz einer Ausnehmung am Längsschlitten können daher seine erhöhten konstruktiven Freiheitsgrade genutzt werden können, hohe Steifigkeitswerte sicherzustellen.

Bildet die Ausnehmung des Längsschlittens mindestens eine Führungsfläche für die Energieführungskette aus, kann der Längsschlitten die Führung der Energieführungskette in vorgegebenen Bewegungsbahnen unterstützen bzw. diese Energieführungskette in solche Bahnen zwingen. Unkontrollierte und/oder unerwünschte Bewegungen der Energieführungskette können so vermieden, was die Energieführungskette schützen und in weiterer Folge die Standfestigkeit der Werkzeugmaschine erhöhen kann.

Die Konstruktionsverhältnisse zum Planschlitten können vereinfacht werden, wenn das Führungsteil ein Rahmengestell aufweist, an dem die mit den Führungsschienen der Linearführung zusammenwirkenden Führungselemente befestigt sind. Insbesondere kann ein Rahmengestell für einen gewichtsreduzierten Planschlitten sorgen, wodurch selbst vergleichsweise schnellen Verstellbewegungen entsprochen werden können.

Auf konstruktiv einfache Weise kann das Zusammenwirken zwischen Auskragung und Längsschlitten gelöst werden, indem die Auskragung in beiden Endstellungen des Planschlittens an den Längsschlitten angrenzt.

Der Schutz der Energieführungskette, insbesondere vor Kühlschmiermittel, kann erhöht werden, indem zwischen Auskragung und Längsschlitten eine berührende Dichtung vorgesehen ist. Zudem können damit eventuelle anfallende Späne auf einfache Weise abgestreift werden, was die Standfestigkeit der Werkzeugmaschine weiter erhöhen kann.

Um weitere ungeschützte Bereiche der Energieführungskette vor Verschmutzung bzw. Beschädigung zu schützen, kann eine Teleskopabdeckung am Längsschlitten und an der der Auskragung gegenüberliegenden Seite des Planschlittens befestigt sein. Zusätzlich können so auch die Führungselemente der Linearführung besonders gut geschützt werden.

Die Energieführungskette kann im Wesentlichen auf der Seite liegend zwischen den Führungsschienen des Planschlittens vorgesehen sein, um damit die Bauhöhe der beiden Schlitten vergleichsweise gering zu halten. Durch diese damit im Wesentlichen parallel zur Vorschubrichtung des Planschlittens bewegte Energieführungskette, kann also ein kompakter Planschlitten geschaffen werden, der eine erhöhte Steifigkeit aufweist.

Vereinfachte Konstruktionsverhältnisse können sich ergeben, wenn die Energieführungskette durch frei nebeneinander angeordnete Schläuche ausgebildet wird. Deren Flexibilität kann nämlich vereinfachte Führungsmöglichkeiten, sowie kompakte Konstruktionsverhältnisse am Planschlitten ermöglichen.

Nimmt wenigstens ein Schlauch der Energieführungskette elektrische Leitungen schützend auf, kann die Standfestigkeit der Energieführungskette erheblich erhöht werden. Die elektrischen Leitungen können dadurch nämlich nicht nur mit einer Schutzhülle umgeben werden, es ist auch möglich, zu vermeiden, dass sich unterschiedlich feste Materialien gegenseitig abreiben.

Die Kompaktheit der Schlittenanordnung kann noch weiter erhöht werden, wenn die Werkzeugmaschine einen zwischen Längsschlitten und Planschlitten vorgesehenen Linearantrieb aufweist, wobei die Energieführungskette unterhalb des Linearantriebs vorgesehen ist.

Höchste Steifigkeitswerte bei Seitenkräften und Momenten können erfüllt werden, wenn die Linearführung zwei geschlossene Führungen, insbesondere Schwalbenschwanzführungen, umfassend je eine der Führungsschienen, aufweist. Im Zusammenhang mit der breiten Beabstandung der Führungsschienen aufgrund der dazwischen vorgesehenen Energieführungskette kann damit eine besonders belastbare Schlittenanordnung geschaffen werden.

In den Figuren ist beispielsweise der Erfindungsgegenstand anhand eines Ausführungsbeispiels dargestellt. Es zeigen
- Fig. 1: eine aufgerissene Seitenansicht auf Teile einer Werkzeugmaschine,
- Fig. 2: eine aufgerissene Stirnansicht der nach Fig. 1 dargestellten Werkzeugmaschine und
- Fig. 3: eine in der Stellung des Planschlittens veränderte Ansicht der Fig. 1.

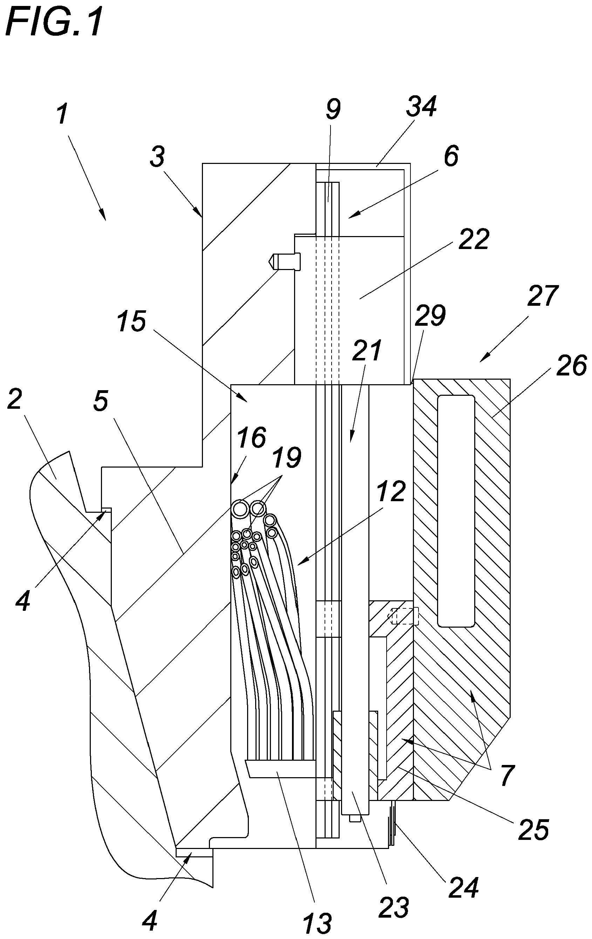

Die nach Fig. 1 als Ausführungsbeispiel teilweise dargestellte Werkzeugmaschine 1 zeigt ein Schrägbett 2, an dem ein Längsschlitten 3 über Führungen 4 linear verstellbar gelagert ist. Der Längsschlitten 3 weist für eine vergleichsweise hohe mechanische Steifigkeit ein Gussteil 5 auf, an dem eine Linearführung 6 für einen Planschlitten 7 befestigt ist.

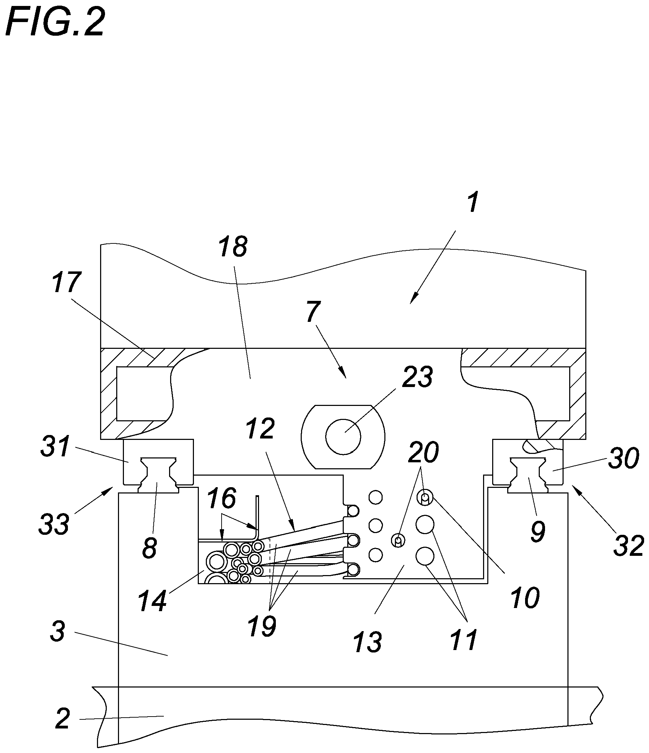

Wie insbesondere der Fig. 2 entnommen werden kann, weist diese Linearführung 6 zwei Schwalbenschwanzführungen 32, 33 auf, die für sich je eine geschlossene Führung darstellen. Am Längsschlitten sind die Führungsschienen 8 und 9 der Linearführung 6 befestigt, an denen die am Planschlitten 7 befestigten anderen Führungselemente 30, 31 der Linearführung 6 linear verschiebbar gelagert sind. Um nun auch am Planschlitten 7 einen elektrischen Anschluss 10 und/oder einen hydraulischen Anschluss 11 - beispielsweise zur Energieversorgung nicht näher dargestellter Verbraucher, die am Planschlitten 7 befestigt sind - bieten zu können, ist zwischen dem Längsschlitten 3 und dem Planschlitten 7 eine Energieführungskette 12 vorgesehen. Diese Energieführungskette 12 ist, wie in Fig. 1 gezeigt, an den Flanschen 13 und 14 des Längsschlittens 3 und des Planschlittens 7 befestigt. Mit der Energieführungskette 12 wird eine Verbindung für elektrische und/oder hydraulische Leitungen zwischen den Anschlüssen an Längs- und Planschlitten 3, 7 ausgebildet. Die Energieführungskette 12 folgt in ihrer Bewegung dem Vorschub der Linearführung 6.

Längs- und Planschlitten 3, 7 erfüllen kompakte Bauverhältnisse, indem die Energieführungskette 12 sowohl zwischen den beiden Führungsschienen 8, 9 der Linearführung 6, als auch zwischen Längs- und Planschlitten 3, 7 vorgesehen ist. Es ist jedoch vorstellbar, dass die Energieführungskette 12 den Führungsschienen 8, 9 bereichsweise übersteht, was nicht näher dargestellt worden ist. Vorteilhaft ist mit einer derartigen Positionierung der Energieführungskette 12 der Arbeitsraum der Werkzeugmaschine 1 von diesem Konstruktionsteil der Werkzeugmaschine frei, wodurch auch ein aufwendiger Beschädigungsschutz der Energieführungskette 12 entfallen kann.

Der Längsschlitten 3 bildet eine Ausnehmung 15 aus, die im Wesentlichen die gesamte Energieführungskette 12 aufnimmt. Dadurch kann der Planschlitten 7 nahe am Längsschlitten 3 positioniert werden, da die Freistellung für die Energieführungskette 12 durch den Längsschlitten 3 geschaffen wird. Dadurch ergibt sich eine mechanisch äußerst steife Schlittenkonstruktion.

Die Ausnehmung 15 wird außerdem zur Bewegungsführung der Energieführungskette 12 genutzt. Zu diesem Zweck bildet der Längsschlitten 3 eine Führungsfläche 16 aus, mit der die Abrollbewegung des Untertrums der Energieführungskette 12 unterstützt wird.

Wie unter gemeinsamer Betrachtung von Figuren 1 und 2 erkannt werden kann, ist die Energieführungskette 12 auf der Seite liegend zwischen den beiden Führungselementen 30 und 31 des Planschlittens 7 vorgesehen. Die Energieführungskette bewegt sich somit im Wesentlichen parallel zur Vorschubrichtung des Planschlittens 7.

Damit ist eine breit abstützende Linearführung 6 für den Planschlitten 7 geschaffen, die das Erreichen einer hohen Steifigkeit in der Schlittenanordnung ermöglicht. Damit wird es auch möglich, den Planschlitten 7 mit einem vorzugsweise gegossenen Rahmengestell 17 zu versehen, an dem Gehäuseplatten 18 befestigt werden. Hierfür können Nieten und/oder Schrauben verwendet werden, was nicht näher dargestellt worden ist. Die Verwendung von vergleichsweise massiven Gussteilen zum Erreichen hoher Steifigkeitswerte kann dadurch reduziert oder auch vermieden werden, wodurch ein vergleichsweise leichter und damit hoch dynamisch zu bewegender Planschlitten 7 geschaffen ist. Am Rahmengestell 17 sind die Führungselemente 30 und 31 befestigt.

Die Energieführungskette 12 wird, wie in Fig. 1 zu erkennen, durch frei nebeneinander angeordnete Schläuche 19 ausgebildet. Diese Schläuche 19 führen einerseits Hydraulikflüssigkeit (im Sinne von Hydraulikleitungen) und sind andererseits auch dazu ausgebildet, elektrische Leitungen 20 zu schützen, indem diese von den Schläuchen 19 ummantelt werden. Zu diesem Zweck werden diese Leitungen 20 durch die Schläuche 19 geführt.

Zur mechanischen Bewegung des Planschlittens 7 und damit der Energieführungskette 12 ist ein Linearantrieb 21 vorgesehen, der über der Energieführungskette 12 positioniert ist. Die vom Elektromotor 22 angetriebene Spindel 23 des als Kugel- oder Rollengewindetrieb ausgeführten Linearantriebs 21 verläuft nämlich über der Energieführungskette 12.

Dadurch, dass der Planschlitten 7 vergleichsweise breit auf dem Längsschlitten 3 durch die Linearführung 6 gelagert ist, um die Energieführungskette 12 aufnehmen zu können, eröffnet sich die Möglichkeit, den Planschlitten 7 mit einem besonders hohen Widerstandsmoment auszugestalten. So ist in der Fig. 1 zu erkennen, dass der Planschlitten 7 ein Führungsteil 25 und eine Auskragung 26 aufweist. Das an die beiden Führungselementen 30, 31 anschließende Führungsteil 25 ist unter Ausnutzung der breiten Führung am Längsschlitten 3 auf hohe Verwindungssteifigkeit und geringes Gewicht ausgelegt, wobei die Auskragung 26 hinsichtlich einer notwendigen Montagefläche anderer Teile der Werkzeugmaschine 1 konstruktiv ausgebildet ist. Damit ergibt sich eine hohe Flexibilität des Planschlittens 7 in seiner Verwendbarkeit an der Werkzeugmaschine 1.

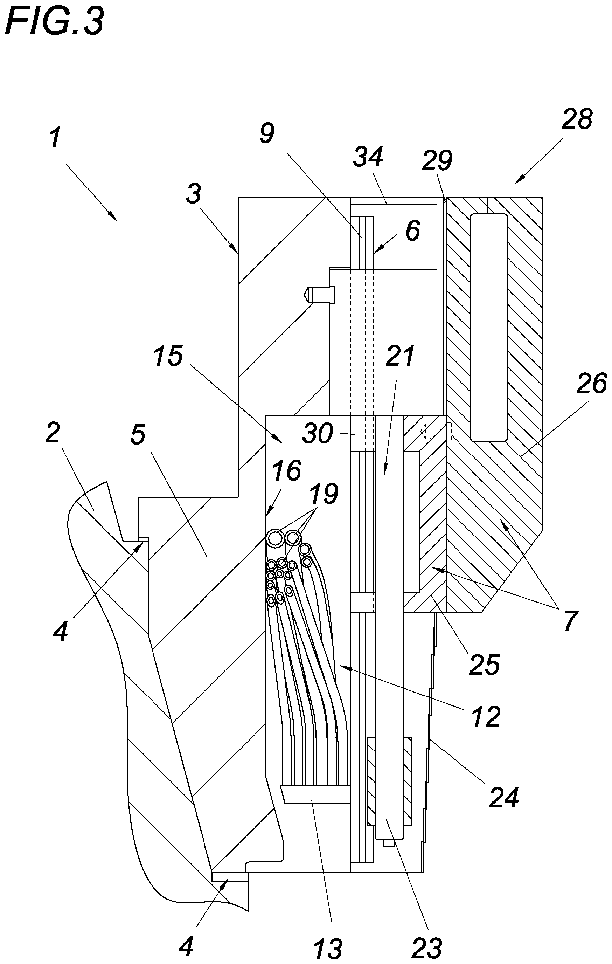

Die Auskragung 26 wird auch als Schutzabdeckung für die Energieführungskette 12 verwendet. Zu diesem Zweck wirkt diese Auskragung 26 mit dem Längsschlitten 3 derart zusammen, dass diese in beiden Endstellungen 27, 28 des Planschlittens 7 an den Längsschlitten 3 angrenzt. Diese Endstellungen 27 und 28 sind am Vergleich der beiden Figuren 1 und 3 zu erkennen.

Außerdem ist zwischen der Auskragung 26 und dem Längsschlitten 3 eine berührende Dichtung 29 vorgesehen, um die Abschottung der Energieführungskette 12 vor Verschmutzung noch weiter zu verbessern.

Dieser Schutz wird zusätzlich erhöht, indem eine Teleskopabdeckung 24 am Längsschlitten 3 und an der der Auskragung 26 gegenüberliegenden Seite des Planschlittens 7 befestigt ist.

Alternativ zu der nach den Figuren 1, 2 und 3 dargestellten Linearführung 6 mit zwei geschlossenen Führungen 32, 33 ist es auch vorstellbar, dass die Linearführung lediglich eine geschlossene Führung aufweist, was jedoch nicht näher dargestellt worden ist. Solch eine geschlossene Führung kann sich beispielsweise durch zwei M-Führungsschienen ausbilden, die am Längsschlitten 3 befestigt sind und in die je eine V-Führungsschiene eingreifen, welche V-Führungsschienen am Planschlitten 7 befestigt sind.

In Fig. 1 ist auch noch eine Abdeckung 34 zu erkennen, die unter anderem den Antrieb 22 vor Verschmutzung schützen kann. Der Planschlitten 7 kann so in seiner Endstellung 28, wie dies insbesondere der Fig. 3 zu entnehmen ist, die Abdeckung 34 von eventuellen Verunreinigungen befreien.

## Patentansprüche

1. Werkzeugmaschine mit einem Längsschlitten (3), mit einer am Längsschlitten (3) befestigten Linearführung (6), die mindestens zwei Führungsschienen (8, 9) aufweist, mit einem an den Führungsschienen (8, 9) verschiebbar gelagerten Planschlitten (7) und mit einer am Planschlitten (7) befestigten Energieführungskette (12), die im Wesentlichen unterhalb des Planschlittens (7) verläuft und sowohl im Wesentlichen zwischen den insbesondere äußeren Führungsschienen (8, 9) der Linearführung (6), als auch zwischen Längs- und Planschlitten (3, 7) vorgesehen ist, **dadurch gekennzeichnet, dass** die Energieführungskette (12) am Längsschlitten (3) befestigt ist und der Planschlitten (7) ein Führungsteil (25), das an die Linearführung (6) anschließt, und eine Auskragung (26) aufweist, die mit dem Längsschlitten (3) zur Ausbildung einer Schutzabdeckung für die Energieführungskette (12) zusammenwirkt.

2. Werkzeugmaschine nach Anspruch 1, **dadurch gekennzeichnet, dass** der Längsschlitten (3) eine Ausnehmung (15) zur Aufnahme der Energieführungskette (12) ausbildet.

3. Werkzeugmaschine nach Anspruch 2, **dadurch gekennzeichnet, dass** die Ausnehmung (15) des Längsschlittens (3) mindestens eine Führungsfläche (16) für die Energieführungskette (12) ausbildet.

4. Werkzeugmaschine nach Anspruch 1, 2 oder 3, **dadurch gekennzeichnet, dass** der Planschlitten (7) mehrteilig ausgeführt ist.

5. Werkzeugmaschine nach einem der Ansprüche 1 bis 4, **dadurch gekennzeichnet, dass** das Führungsteil (25) ein Rahmengestell (17) aufweist, an dem die mit den Führungsschienen (8, 9) der Linearführung (6) zusammenwirkenden Führungselemente (30, 31) befestigt sind.

6. Werkzeugmaschine nach einem der Ansprüche 1 bis 5, **dadurch gekennzeichnet, dass** die Auskragung (26) in beiden Endstellungen (27, 28) des Planschlittens (7) an den Längsschlitten (3) angrenzt.

7. Werkzeugmaschine nach einem der Ansprüche 1 bis 6, **dadurch gekennzeichnet, dass** zwischen Auskragung (26) und Längsschlitten (3) eine berührende Dichtung (29) vorgesehen ist.

8. Werkzeugmaschine nach einem der Ansprüche 1 bis 7, **dadurch gekennzeichnet, dass** eine Teleskopabdeckung (24) am Längsschlitten (3) und an der der Auskragung (26) gegenüberliegenden Seite des Planschlittens (7) befestigt ist.

9. Werkzeugmaschine nach einem der Ansprüche 1 bis 8, **dadurch gekennzeichnet, dass** die Energieführungskette (12) im Wesentlichen auf der Seite liegend zwischen den Führungsschienen (8, 9) des Planschlittens (7) vorgesehen ist.

10. Werkzeugmaschine nach einem der Ansprüche 1 bis 9, **dadurch gekennzeichnet, dass** die Energieführungskette (12) durch frei nebeneinander angeordnete Schläuche (19) ausgebildet wird.

11. Werkzeugmaschine nach Anspruch 10, **dadurch gekennzeichnet, dass** wenigstens ein Schlauch (19) der Energieführungskette (12) elektrische Leitungen (20) schützend aufnimmt.

12. Werkzeugmaschine nach einem der Ansprüche 1 bis 11, **dadurch gekennzeichnet, dass** die Werkzeugmaschine (1) einen zwischen Längsschlitten (3) und Planschlitten (7) vorgesehenen Linearantrieb (21) aufweist, wobei die Energieführungskette (12) unterhalb des Linearantriebs (21) vorgesehen ist.

13. Werkzeugmaschine nach einem der Ansprüche 1 bis 12, **dadurch gekennzeichnet, dass** die Linearführung (6) zwei geschlossene Führungen, insbesondere Schwalbenschwanzführungen (32, 33), umfassend je eine der Führungsschienen (8, 9), aufweist.

## Claims

1. A machine tool, comprising a longitudinal slide (3), a linear guide (6) which is fastened to the longitudinal slide (3) and which comprises at least two guide rails (8, 9), a cross slide (7) which is displaceably mounted on the guide rails (8, 9), and a cable carrier chain (12) which is fastened to the cross slide (7) and which extends substantially beneath the cross slide (7) and is provided both substantially between the especially outer guide rails (8, 9) of the linear guide (6) and also between the longitudinal and cross slides (3, 7), **characterized in that** the cable carrier chain (12) is fastened to the longitudinal slide (3) and the cross slide (7) comprises a guide part (25) which adjoins the linear guide (6), and comprises a projection (26) which interacts with the longitudinal slide (3) for forming a protective cover for the cable carrier chain (12).

2. A machine tool according to claim 1, **characterized in that** the longitudinal slide (3) forms a recess (15) for accommodating the cable carrier chain (12).

3. A machine tool according to claim 2, **characterized in that** the recess (15) of the longitudinal slide (3) forms at least one guide surface (16) for the cable carrier chain (12).

4. A machine tool according to claim 1, 2 or 3, **characterized in that** the cross slide (7) is formed in several parts.

5. A machine tool according to one of the claims 1 to 4, **characterized in that** the guide part (25) comprises a frame structure (17) on which the guide elements (30, 31) are fastened which interact with the guide rails (8, 9) of the linear guide (6).

6. A machine tool according to one of the claims 1 to 5, **characterized in that** the projection (26) adjoins the longitudinal slide (3) in both end positions (27, 28) of the cross slide (7).

7. A machine tool according to one of the claims 1 to 6, **characterized in that** a contacting seal (29) is provided between the projection (26) and the longitudinal slide (3).

8. A machine tool according to one of the claims 1 to 7, **characterized in that** a telescopic cover (24) is fastened to the longitudinal slide (3) and to the side of the cross slide (7) which is opposite the projection (26).

9. A machine tool according to one of the claims 1 to 8, **characterized in that** the cable carrier chain (12) is provided lying substantially on the side between the guide rails (8, 9) of the cross slide (7).

10. A machine tool according to one of the claims 1 to 9, **characterized in that** the cable carrier chain (12) is formed by hoses (19) which are arranged freely adjacent to each other.

11. A machine tool according to claim 10, **characterized in that** at least one hose (19) of the cable carrier chain (12) accommodates electrical lines (20) in a protective manner.

12. A machine tool according to one of the claims 1 to 11, **characterized in that** the machine tool (1) comprises a linear drive (21) provided between the longitudinal slide (3) and the cross slide (7), wherein the cable carrier chain (12) is provided beneath the linear drive (21).

13. A machine tool according to one of the claims 1 to 12, **characterized in that** the linear drive (6) comprises two closed guides, especially dovetail guides (32, 33), comprising one each of the guide rails (8, 9).

## Revendications

1. Machine-outil à chariot longitudinal (3), avec un guide linéaire (6) fixé au chariot longitudinal (3) qui présente au moins deux rails de guidage (8, 9), avec un chariot transversal (7) supporté avec possibilité de translation sur les rails de guidage (8, 9) et avec une chaîne de transport d'énergie (12) fixée au chariot transversal (7), qui passe pour l'essentiel en dessous du chariot transversal (7) et qui est prévue aussi bien, pour l'essentiel, entre les rails de guidage (8, 9), en particulier extérieurs, du guide linéaire (6) qu'entre le chariot longitudinal et le chariot transversal (3, 7), **caractérisée en ce que** la chaîne de transport d'énergie (12) est fixée au chariot longitudinal (3) et le chariot transversal (7) présente une partie de guidage (25) qui se raccorde au guide linéaire (6) et un évasement (26) qui coopère avec le chariot longitudinal (3) pour former une couverture de protection pour la chaîne de transport d'énergie (12).

2. Machine-outil selon le revendication 1, **caractérisée en ce que** le chariot longitudinal (3) forme un creux (15) pour recevoir la chaîne de transport d'énergie (12).

3. Machine-outil selon le revendication 2, **caractérisée en ce que** le creux (15) du chariot longitudinal (3) forme au moins une surface de guidage (16) pour la chaîne de transport d'énergie (12).

4. Machine-outil selon le revendication 1, 2 ou 3, **caractérisée en ce que** le chariot transversal (7) est réalisé en plusieurs parties.

5. Machine-outil selon l'une des revendications 1 à 4, **caractérisé en ce que** la partie de guidage (25) présente un bâti de cadre (17) sur lequel sont fixés les éléments de guidage (30, 31) qui coopèrent avec les rails de guidage (8, 9) du guide linéaire (6).

6. Machine-outil selon l'une des revendications 1 à 5, **caractérisée en ce que** l'évasement (26) est limitrophe du chariot longitudinal (3) dans les deux positions de fin de course (27, 28) du chariot transversal (7).

7. Machine-outil selon l'une des revendications 1 à 6, **caractérisée en ce qu'**un joint d'étanchéité (29) en contact est prévu entre l'évasement (26) et le chariot longitudinal (3).

8. Machine-outil selon l'une des revendications 1 à 7, **caractérisée en ce qu'**une couverture télescopique (24) est fixée sur le chariot longitudinal (3) et sur le côté du chariot transversal (7) faisant face à l'évasement (26).

9. Machine-outil selon l'une des revendications 1 à 8, **caractérisée en ce que** la chaîne de transport d'énergie (12) est pour l'essentiel couchée sur le côté entre les rails de guidage (8, 9) du chariot transversal (7).

10. Machine-outil selon l'une des revendications 1 à 9, **caractérisée en ce que** la chaîne de transport d'énergie (12) est formée par des tuyaux flexibles (19) disposés librement les uns à côté des autres.

11. Machine-outil selon le revendication 10, **caractérisée en ce qu'**au moins un tuyau flexible (19) de la chaîne de transport d'énergie (12) reçoit des lignes électriques (20) en les protégeant.

12. Machine-outil selon l'une des revendications 1 à 11, **caractérisée en ce que** la machine-outil (1) présente un entraînement linéaire (21) prévu entre le chariot longitudinal (3) et le chariot transversal (7), la chaîne de transport d'énergie (12) étant prévue en dessous de l'entraînement linéaire (21).

13. Machine-outil selon l'une des revendications 1 à 12, **caractérisée en ce que** le guide linéaire (6) présente deux guides fermés, en particulier des guides en queue d'aronde (32, 33), renfermant chacun un des rails de guidage (8, 9).
